# EUROPEAN PATENT APPLICATION

(11) **EP 1 767 888 A2**
(43) Date of publication of application: **28.03.2007**
(21) Application number: 06120378.2
(22) Date of filing: 08.09.2006
(51) Int. Cl.: F28F 9/04, F28D 7/02, F28F 9/26

(54) **Fitting for connection of a heat exchanger**

(30) Priority: 26.09.2005 NO 20054444
(71) Applicant: OSO Hotwater AS, 3301 Hokksund (NO)
(72) Inventor: Braathen, Thor Frölich, NO-3359, Eggedal (NO); Braathen, Chris Reidar Frölich, NO-0759, Oslo (NO)
(74) Representative: Karlström, Lennart

(57) **Abstract**

A device is described for a fitting for connecting together one or more heat exchangers (2) to a hot water container (9) of the pressure type that encompasses:
A connection (1) in the form of a cylindrical pipe with a first end and a second end, the first end is made to be fastened to the wall, top or bottom of the hot water container (9), and the second end is made to be connected to further pipe parts, valves, etc., said connection (1) is fitted with a section (11) incorporating at least two groove equipped sections fitted with O-rings (4), where the inner diameter of the connection (1) is larger than or equal to the outer diameter of the pipe of the heat exchanger (2), and also an inner pipe-formed sleeve (3), the inner diameter of which is smaller than or equal to the inner diameter of the pipe (2) of the heat exchanger, as the connection (1) is connected to the wall, top or bottom of the water heater (9), and one end of the pipe (2) of the heat exchanger is led through a through-going hole in the wall, top or bottom of the water heater (9) and a distance into the connection (1) beyond the section (11), that the sleeve (3) is led into the end of the pipe (2) of the heat exchanger that lies in the connection (1), and that the section (11) is squeezed together to a smaller diameter for the purpose of providing a leak-proof connection between the pipe (2) of the heat exchanger , the connection (1) and the inner sleeve (3).

## Description

The present invention relates to a device for a fitting for connection of one or more heat exchangers to a hot water container of the pressure tank type according to the preamble of claim 1.

From US 2005/0067154 it is known a water heater with a heat exchanger in the form of a pipe coil. This document describes the fastening of the tube coil and fitting for external connection of the pipe coil.

Also from US 2005/0139173 it is known a water heater with a pipe heat exchanger.

In some hot water containers of the pressure tank type, heat exchangers are used for heating the water in the tank. Use of heat exchangers in this connection has been steadily more relevant because of an increased use of heat pumps that produce heat in the form of a heated liquid. To use this technique for heating water, the heated liquid is led through a heat exchanger that is placed in a hot water container. The heat exchanger itself is often in the form of a pipe coil/spiral that is placed in the hot water container, and where the connection for circulation of the heating liquid through the heat exchanger is led through the wall of the hot water container.

Most of the known heat exchangers in hot water containers have normally sturdy pipe stubs that are welded to the heat exchanger and which again are welded to the top/bottom or sides of the container. As these connections shall be made by welding, the pipe in the heat exchanger must have a material thickness of least 1 mm. Because of the steadily increasing prices of the materials that heat exchangers are made from, normally stainless steel, it will be desirable to be able to reduce the cost of the materials, preferably by reducing the material thickness of the heat exchanger with, for example, 10-20%. To be able to retain the quality and life expectancy of the heat exchanger, welding must therefore be avoided in the manufacture of the necessary connections.

A corresponding increase in the cost of the materials is also the case for the hot water container itself, and here it will also be desirable to be able to reduce the cost of materials by reducing the material thickness. This will also mean that welding of the pipe stubs must be avoided.

Therefore, the aim of the present invention is to provide a device for a fitting for connection to one or more heat exchangers to a hot water container of the pressure tank type, where one does not have to use welding of the pipe ends of the heat exchanger to fasten these to the water heater.

This is achieved with a device for a device for a fitting for connection of one or more heat exchangers to a hot water container of the pressure tank type that is characterised in that it encompasses:
A connection in the form of a cylindrical pipe with a first end and a second end, said first end is arranged to be fastened to the wall, bottom or top of the hot water container, and the other end is arranged to be connected with further pipe parts, valves etc., said connection is fitted with a section incorporating at least two sections fitted with grooves and equipped with O-rings, where the inner diameter of the connection is larger or equal to the outer diameter of the heat exchanger pipe, and also an inner pipe-formed sleeve, the inner diameter of which is smaller than or equal to the inner diameter of the heat exchanger pipe, as the connection is connected to the wall, top or bottom of the water heater, and one end of the heat exchanger pipe is led through a through hole in the wall, top or bottom of the water heater and a distance into the connection past said section, that the sleeve is led into the one end of the heat exchanger pipe that lies inside the connection, and that said section is squeezed together to a smaller diameter with the object of providing a leak-proof connection between the pipe of the heat exchanger, the connection and the inner sleeve.

With regard to a preferred embodiment of the invention, the first end of the connection is equipped with a threaded section for connection to a complimentary formed threaded section on the wall, top or bottom of the water heater.

With regard to a second preferred embodiment, the first end of the connection is fastened to the wall, top or bottom of the water heater with the help of welding.

With regard to yet another preferred embodiment, the other end of the connection protrudes out from the wall, top or bottom of the hot water container.

The other end of the connection is preferably formed with a connecting body for joining of the connection to other pipe parts.

With respect to a special embodiment the other end of the connection with the section protrudes into the hot water container and its first end is provided with a section with an enlarged diameter to lie against the inside of the wall, top or bottom of the hot water container and that this section is fitted with a sealing body in the form of an O-ring, and that a part of the first end protrudes out of the hot water containers and is fitted with a threaded section to cooperate with a complimentary formed locking nut, as the locking nut and/or the part of the connection that protrudes out is fitted with a groove for an O-ring. This embodiment is especially suitable in the cases where it is important to reduce the dimensions of the parts that protrude out of the hot water container.

The invention will now be explained in more detail with the help of embodiment examples with reference to the enclosed figures, in which:
Figure 1 is a principle drawing that shows an example of a typical, previously known, heat exchanger for placing in a water heater.
Figure 2 shows a section through a first embodiment of a fitting with regard to the invention for screw fitting to a water heater.
Figure 3 shows a section through a fitting with regard to the invention for permanent welding to the hot water container.
Figure 4 shows a section of an embodiment of the invention where the fitting itself is fitted inside the water heater.

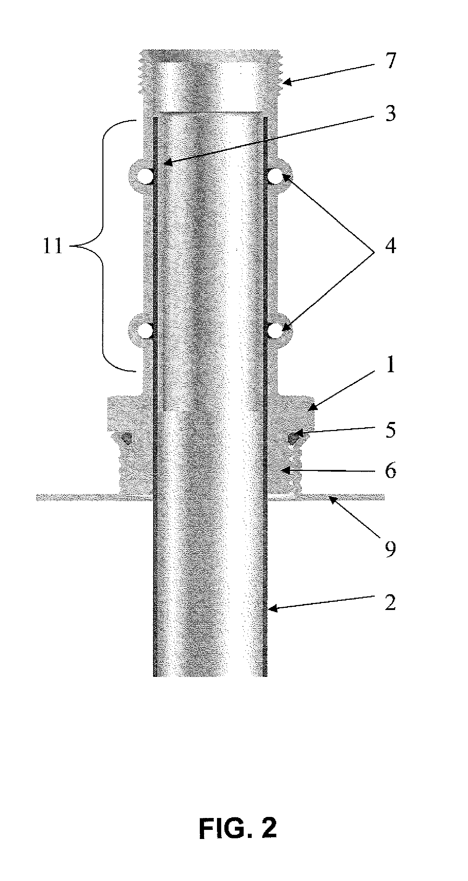

In the figures 2-4, the same reference number refers to identical or corresponding components.

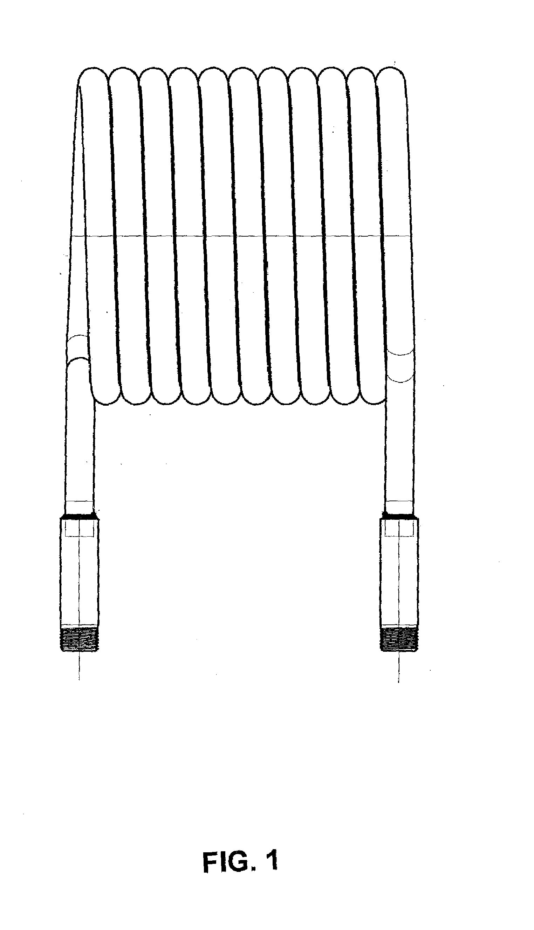

An example of a typical, previously known, heat exchanger is shown in figure 1. The heat exchanger encompasses one or more pipe loops 1 with pipe stubs 2, 3 that are welded to the pipe loop. The pipe stubs 2, 3 were previously led out through complimentary holes in the sidewall, top or bottom of the hot water container and the pipe stubs were welded to the water heater with the outer end of the pipe stubs 2, 3 protruding out from the tank. This previously known heat exchanger had a material thickness that permitted welding.

If the material thickness of the heat exchanger is reduced, it will no longer be practically possible to weld the pipe stubs to the heat exchanger.

To achieve the objectives and the advantages with respect to the present invention, a fitting is provided that makes it possible to reduce the material thickness of the heat exchanger and, at the same time, achieve a reliable and simple connection.

An embodiment of the fitting with regard to the present invention is shown in figure 2. A connection 1 is screwed to the top, bottom or wall of the tank 9. The connection 1 has a lower threaded section 6 with an O-ring 5 that forms a seal against a complimentary formed threaded section on the tank 9. The connection 1 is manufactured from appropriate material, for example, copper, brass or stainless steel. The connection 1 has one or more sections with increased diameter, in which at least two grooves 4 with O-rings are formed. The pipe 2 of the heat exchanger, which is a thin-walled pipe, is led into the connection 1 and to a certain distance, preferably at least 10 mm, beyond the upper groove 4 of the connection 1. A support sleeve 3 is led into the pipe 2 of the heat exchanger of the inside the connection 1. The combination of this support sleeve 3 together with the thin-walled pipe 2 of the heat exchanger, achieves a combined rigidity that corresponds to the rigidity of a traditional, thick-walled heat exchanger pipe. This means that equally strong force can be used in the squeezing together of the connection 1. Thereafter, the section 11 of the connection 1 is squeezed together, preferably with the help of hydraulic pliers, so that the pipe parts 1, 2, 3 are squeezed together and form a leak-proof connection, at the same time as the heat exchanger pipe 2 sits securely. The O-rings in the grooves 4 result in a further seal. The upper end 7 of the connection 1 is formed for joining other pipe parts, for example, valves, and in the embodiment shown, the upper end 7 is fitted with threads. The upper end 7 can also be formed for connections types other than threads.

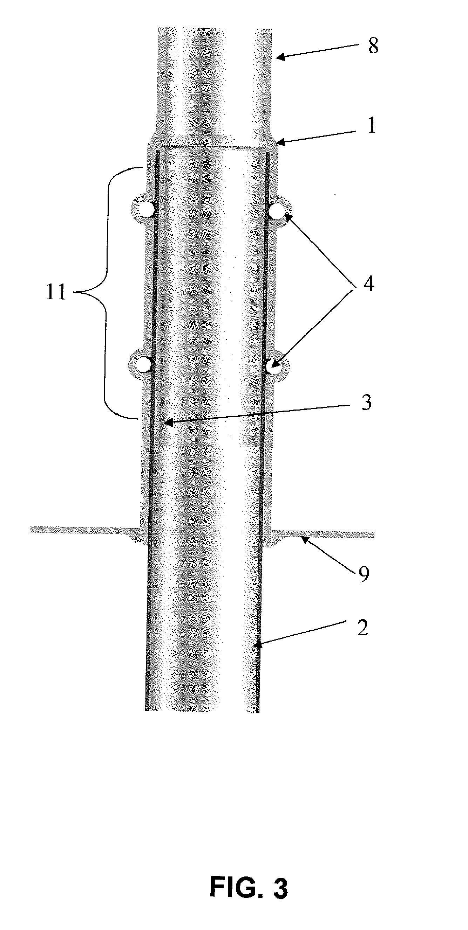

Figure 3 shows a variant of the fitting where the connection 1 is manufactured from a material that can be welded, for example, stainless steel. The lower end of the connection 1 is welded to the tank 9. The connection 1 is, in a corresponding way to the embodiment in figure 2, equipped with a section 11 with at least two groove equipped sections with enlarged diameter, in which O-rings 4 are provided. The heat exchanger pipe 2 is, in the same way, led up to the connection 1 and an inner sleeve 3 is placed inside the heat exchanger pipe 2. Thereafter, the connection 1 is squeezed together in the area 11 so that a leak-proof connection is formed between the heat exchanger pipe 2, the connection 1 and the casing 3. In this embodiment it is shown that the upper end 8 of the connection is formed for joining to further pipe parts with the help of a clamping ring connection (not shown). The upper end of the connection 1 can also be formed in another way, for example, with a threaded section as shown in figure 2.

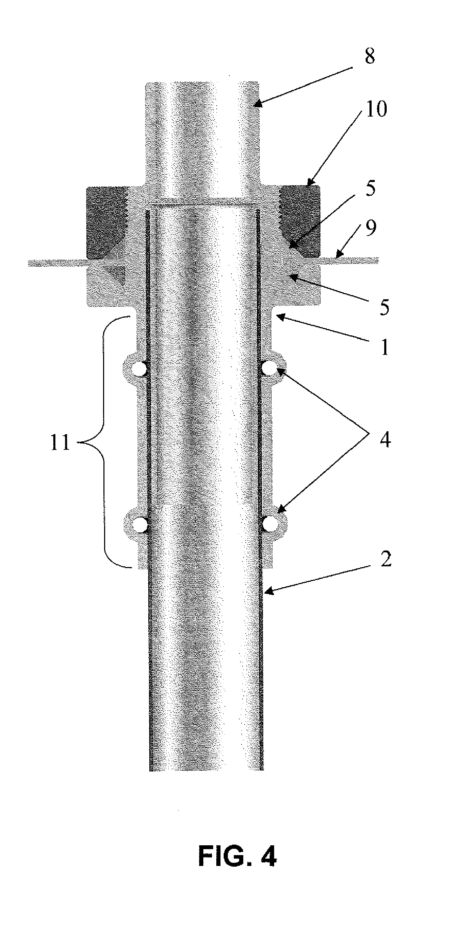

A further embodiment of the fitting with regard to the present invention is shown in figure 4. If it is difficult to place the fitting on the outside of the tank 9 because of space consideration, it can instead be placed inside the tank. At the upper end of the connection 1, that lies against the wall, top or bottom of the tank, a section is formed with a larger diameter that lies against the inside of the tank 9 and a threaded section that cooperates with a complimentarily formed nut 10 that is screwed on from the outside. Both the nut 10 and the section of the connection that lies against the inside of the tank are formed with grooves for placing of O-rings 5. These O-rings 5 together with metallic friction between the connection 1, tank wall 9 and the nut 10 will provide a sturdy anchorage and give a good seal. The heat exchanger pipe 2 is, in the same way as in the above described embodiments, led into the connection 1 and a casing 3 is led into the upper part of the heat exchanger pipe 2. Finally, the section 11 of the connection 1 is squeezed together so that a leak-proof connection is formed between the heat exchanger pipe 2, the connection 1 and the sleeve 3.

## Claims

1. Device for a fitting for the connection of one or more heat exchangers (2) to a hot water container (9) of the pressure tank type,
**characterised in that** it encompasses:
a connection (1) in the form of a cylindrical pipe with a first end and a second end, said first end being arranged to be fastened to the wall, top or bottom of the hot water container (9), and the second end being arranged to be connected to further pipe parts, valves, etc., said connection (1) is fitted with a section (11) encompassing at least two groove carrying sections equipped with O-rings (4), where the inner diameter of the connection (1) is larger than or equal to the outer diameter of the pipe of the heat exchanger (2), and also an inner pipe-formed sleeve (3) the inner diameter of which is less than or equal to the inner diameter of the heat exchanger pipe (2), as the connection (1) is connected to the wall, top or bottom of the hot water container (9), and one end of the heat exchanger pipe (2) is led through a through-going hole in the wall, top or bottom of the hot water container (9) and a distance into the connection (1) beyond the section (11), that the sleeve (3) is led into the end of the heat exchanger pipe (2) that lies in the connection (1), and that the section (11) is squeezed together to a smaller diameter for the purpose of providing a leak-proof connection between the heat exchanger pipe (2), the connection (1) and the inner sleeve (3).

2. Device for a fitting according to claim 1,
**characterised in that** the first end of the connection (1) is fitted with a threaded section (6) for connecting to a complimentarily formed threaded section on the wall, top or bottom of the water heater (9).

3. Device for a fitting according to claim 1,
**characterised in that** the first end of the connection (1) is fastened to the wall, top or bottom of the water heater with the help of welding.

4. Device for a fitting according to any of the claims 1 - 3,
**characterised in that** the other end (7, 8) of the connection (1), protrudes from the wall, top or bottom of the hot water container (9).

5. Device for a fitting according to any of the claims 1 - 4,
**characterised in that** the other end (7, 8) of the connection (1) is formed with a joining body (7, 8) for coupling together the connection (1) with other pipe parts.

6. Device for a fitting according to claim 1,
**characterised in that** the other end of the connection (1) with the section (11) protrudes into the hot water container (9) and that the first end is provided with a section with an enlarged diameter to lie against the inside of the wall, top or bottom of the hot water container (9) and that this section is fitted with a sealing body (5) in the form of an 0-ring, and that a part of the first end protrudes from the hot water container (9) and is fitted with a threaded section to cooperate with a complimentarily formed locking nut (10), as the locking nut (10) and/or the protruding part of the connection (1) is fitted with a groove for an O-ring (5).
